# EUROPÄISCHE PATENTANMELDUNG

(11) **EP 4 169 670 A2**
(43) Veröffentlichungstag der Anmeldung: **26.04.2023**
(21) Anmeldenummer: 22183316.3
(22) Anmeldetag: 23.01.2013
(51) Int. Cl.: B25F 5/00

(54) **WERKZEUGAUFNAHME**

(30) Priorität: 08.03.2012 DE 102012004458
(62) Teilanmeldung aus: 13701969.1
(71) Anmelder: Robert Bosch GmbH, 70469 Stuttgart (DE)
(72) Erfinder: MUELLER-BOYSEN, Ulrich, 73732 Esslingen (DE); KREISSIG, Albrecht, 70599 Stuttgart (DE); LUESCHER, Bruno, 4800 Zofingen (CH); WAIBEL, Tobias, 73760 Ostfildern (DE)

(57) **Zusammenfassung**

Die Erfindung geht aus von einer Werkzeugaufnahme (10, 110, 210), insbesondere Handwerkzeugmaschinenwerkzeugaufnahme, die zu einem oszillierenden und/oder rotatorischen Antrieb zumindest eines Einsatzwerkzeugs (12) vorgesehen ist, mit zumindest einem aufnahmeseitigen Befestigungselement (14, 114, 214), das zumindest im Wesentlichen zu einer Koppelung mit dem Einsatzwerkzeug (12) vorgesehen ist, und mit zumindest einer Lagereinheit (16, 116, 216), die dazu vorgesehen ist, das Befestigungselement (14, 114, 214) in eine zumindest teilweise von einer Axialrichtung (18) abweichende Bewegung beweglich zu lagern.

Es wird vorgeschlagen, dass die zumindest teilweise von der Axialrichtung (18) abweichende Bewegung des zumindest einen Befestigungselements (14, 114, 214) zumindest im Wesentlichen dazu vorgesehen ist, eine Befestigungskraft in Axialrichtung (18) zu erzeugen.

## Beschreibung

### Stand der Technik

Es sind bereits Werkzeugaufnahmen nach dem Oberbegriff des Anspruchs 1 bekannt.

### Offenbarung der Erfindung

Die Erfindung geht aus von einer Werkzeugaufnahme, insbesondere von einer Handwerkzeugmaschinenwerkzeugaufnahme, die zu einem oszillierenden und/oder rotatorischen Antrieb zumindest eines Einsatzwerkzeugs vorgesehen ist, mit zumindest einem aufnahmeseitigen Befestigungselement, das zumindest im Wesentlichen zu einer Koppelung mit dem Einsatzwerkzeug vorgesehen ist, und mit zumindest einer Lagereinheit, die dazu vorgesehen ist, das Befestigungselement in eine zumindest teilweise von einer Axialrichtung abweichende Bewegung beweglich zu lagern.

Es wird vorgeschlagen, dass die zumindest teilweise von einer Axialrichtung abweichende Bewegung des zumindest einen Befestigungselements zumindest im Wesentlichen dazu vorgesehen ist, eine Befestigungskraft in Axialrichtung zu erzeugen. Unter "vorgesehen" soll insbesondere speziell ausgestaltet, ausgelegt und/oder ausgestattet verstanden werden.

Unter "aufnahmeseitig" soll in diesem Zusammenhang insbesondere verstanden werden, dass das zumindest eine Befestigungselement, insbesondere zumindest im Wesentlichen in Axialrichtung, an einem Ende der Werkezugaufnahme, insbesondere verliersicher, angeordnet ist, das zumindest im Wesentlichen direkt mit dem Einsatzwerkzeug kontaktierbar und koppelbar ausgebildet ist und insbesondere, dass das zumindest eine Befestigungselement in einem mit der Werkzeugaufnahme verbundenen Zustand insbesondere durch eine Befestigungsausnehmung eines Einsatzwerkzeugs hindurchgeführt werden kann. In einem besonders bevorzugten Ausführungsbeispiel ist das zumindest eine Befestigungselement insbesondere zumindest teilweise, vorzugsweise vollständig, und verliersicher mit der Werkzeugaufnahme verbunden und ist zumindest im Wesentlichen dazu vorgesehen, insbesondere auch bei einer Demontage des Einsatzwerkzeugs mit der Werkzeugaufnahme zumindest teilweise, vorzugsweise vollständig, mit der Werkzeugaufnahme verbunden zu bleiben. Dadurch kann ein Verlust des zumindest einen Befestigungselements vorteilhaft sicher verhindert werden. Zudem kann bei einem Befestigen des Einsatzwerkzeugs in der Werkzeugaufnahme durch einen Bediener ein Hantieren mit zumindest einem zusätzlichen Bauteil vermieden werden.

Unter einer "Lagereinheit" soll in diesem Zusammenhang insbesondere eine Einheit verstanden werden, die zumindest im Wesentlichen dazu vorgesehen ist, zumindest eine Kraft eines zu lagernden Bauteils, insbesondere des zumindest einen Befestigungselements, aufzunehmen und abzustützen. Unter "beweglich lagern" soll in diesem Zusammenhang insbesondere verstanden werden, dass die Lagereinheit zusätzlich zu einer Führung einer Bewegung des zu lagernden Bauteils, insbesondere des zumindest einen Befestigungselements, in zumindest eine Richtung vorgesehen ist.

Unter einer "Axialrichtung" soll in diesem Zusammenhang insbesondere eine Richtung verstanden werden, die zumindest im Wesentlichen parallel zu einer Antriebsachse der Werkzeugaufnahme verläuft. Unter "zumindest im Wesentlichen" soll in diesem Zusammenhang insbesondere verstanden werden, dass eine Abweichung von einem vorgegebenen Wert insbesondere weniger als 25 °, vorzugsweise weniger als 10 ° und besonders bevorzugt weniger als 5 ° des vorgegebenen Werts abweicht. Unter einer "von der Axialrichtung abweichende Bewegung" soll in diesem Zusammenhang insbesondere eine Bewegung entlang einer Richtung verstanden werden, die insbesondere zumindest um 30 °, bevorzugt um zumindest um 45 °, vorzugsweise zumindest um 60 ° und besonders bevorzugt um zumindest im Wesentlichen 90 ° von der Axialrichtung abweicht.

Die Koppelung des zumindest einen Befestigungselements mit dem Einsatzwerkzeug ist vorzugsweise lösbar, besonders bevorzugt werkzeuglos lösbar ausgebildet. Unter "lösbar" soll in diesem Zusammenhang insbesondere "zerstörungsfrei trennbar" verstanden werden. Die Koppelung des zumindest einen Befestigungselements mit dem Einsatzwerkzeug ist vorzugsweise kraft- und/oder formschlüssig ausgebildet. Unter "kraft- und/oder formschlüssig" soll dabei insbesondere verstanden werden, dass eine Haltekraft zwischen zwei Bauteilen vorzugsweise durch einen geometrischen Eingriff der Bauteile ineinander und/oder eine Reibkraft zwischen den Bauteilen übertragen wird.

Durch die erfindungsgemäße Ausgestaltung kann insbesondere eine flexibel einsetzbare Werkzeugaufnahme, die insbesondere zu einer Koppelung mit unterschiedlichen Einsatzwerkzeugen vorgesehen ist, erreicht werden, wobei ein zumindest im Wesentlich werkzeugloses und einfaches Spannen und/oder Lösen des Einsatzwerkzeugs an der Werkzeugaufnahme erreicht werden kann. Dadurch kann ein bevorzugt hoher Bedienkomfort einer Handwerkzeugmaschine, die die erfindungsgemäße Werkzeugaufnahme umfasst, erreicht werden.

Ferner geht die Erfindung aus von einer Werkzeugaufnahme, insbesondere von einer Handwerkzeugmaschinenwerkzeugaufnahme, die zu einem oszillierenden und/oder rotatorischen Antrieb zumindest eines Einsatzwerkzeugs vorgesehen ist, mit zumindest einem Befestigungselement, das zumindest im Wesentlichen zu einer Koppelung mit dem Einsatzwerkzeug vorgesehen ist.

Es wird vorgeschlagen, dass die Werkzeugaufnahme eine Übersetzungseinheit aufweist, die dazu vorgesehen ist, eine von einer Axialbewegung zumindest teilweise abweichende Relativbewegung zwischen dem Einsatzwerkzeug und dem Befestigungselement in eine, zumindest im Wesentlichen von einer Spannkraft F gebildeten Befestigungskraft, in Axialrichtung zu übersetzen.

Unter einer "Axialbewegung" soll in diesem Zusammenhang insbesondere eine Bewegung verstanden werden, die zumindest im Wesentlichen parallel zur Axialrichtung verläuft. Unter einer "Relativbewegung" soll in diesem Zusammenhang insbesondere eine Bewegung zwischen zumindest zwei Bauteilen, insbesondere zumindest zwischen dem Einsatzwerkzeug und dem zumindest einen Befestigungselement, verstanden werden. Unter "übersetzen" soll in diesem Zusammenhang insbesondere eine Änderung zumindest einer Geschwindigkeit, insbesondere einer Richtung und/oder eines anderen, einem Fachmann als sinnvoll erscheinenden Parameters insbesondere einer Bewegung, verstanden werden. Die Übersetzungseinheit weist hierzu insbesondere eine Übersetzungskontur, wie beispielsweise eine Kulissenführung oder eine Schrägfläche, einen Hebelmechanismus oder eine andere, einem Fachmann als sinnvoll erscheinende Ausgestaltung auf.

Dadurch kann insbesondere eine vorteilhaft einfache, schnelle, bedienerfreundliche und vorzugsweise werkzeuglose Koppelung des Einsatzwerkzeugs mit der Werkzeugaufnahme erreicht werden, wodurch ein bevorzugt hoher Bedienkomfort einer Handwerkzeugmaschine, die die erfindungsgemäße Werkzeugaufnahme umfasst, erreicht werden kann.

Des Weiteren wird vorgeschlagen, dass die Werkzeugaufnahme eine weitere Übersetzungseinheit aufweist, die zumindest im Wesentlichen zu einer Übersetzung zumindest einer Bewegung in Axialrichtung in eine Bewegung in eine von der Axialrichtung abweichende Richtung des Befestigungselements vorgesehen ist. Unter einer "Übersetzung" soll in diesem Zusammenhang insbesondere eine Änderung zumindest einer Geschwindigkeit, insbesondere einer Richtung und/oder eines anderen, einem Fachmann als sinnvoll erscheinenden Parameters, insbesondere einer Bewegung, verstanden werden.

Dadurch kann eine konstruktiv einfache, schnelle und kostengünstige Übersetzung der Bewegung in Axialrichtung in die Bewegung in die von der Axialrichtung abweichende Richtung des zumindest einen Befestigungselements erreicht werden.

Zudem wird vorgeschlagen, dass die Werkzeugaufnahme zumindest ein Spannelement umfasst, das zumindest einen konusförmigen Bereich aufweist. Unter "konusförmig" soll dabei insbesondere eine positive oder negative Form verstanden werden, die in unterschiedlichen Querschnittsebenen zumindest in etwa kreisrund ist und die sich entlang einer Richtung senkrecht zu den Querschnittsebenen verjüngt. Unter einer "negativen Konusform" soll insbesondere eine konusförmige Ausnehmung verstanden werden, d.h. eine Materialaussparung, deren nach innen gewandte Fläche die Form eines Konus hat. Unter einer "positiven Konusform" soll insbesondere ein Element verstanden werden, dessen nach außen gewandte Fläche die Form eines Konus hat. Der konusförmige Bereich erstreckt sich in Umfangsrichtung zumindest im Wesentlichen vollständig um das Spannelement herum. Es ist auch denkbar, dass sich der konusförmige Bereich in Umfangsrichtung über zumindest einen, vorzugsweise über mehrere Teilbereiche, d.h. über Kreissegmente eines Umfangs, des Spannelements erstreckt.

In einem besonders bevorzugten Ausführungsbeispiel ist der konusförmige Bereich zumindest teilweise einstückig mit dem Spannelement verbunden. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling.

Dadurch kann insbesondere eine konstruktiv einfache und bevorzugt funktionelle Ausgestaltung des Spannelements erreicht werden.

Ferner wird vorgeschlagen, dass der zumindest eine konusförmige Bereich zumindest teilweise die weitere Übersetzungseinheit bildet. Dadurch kann auf vorteilhaft einfache und kostengünstige Weise eine robuste Übersetzungseinheit erreicht werden, die bevorzugt wenige Bauteile umfasst.

Des Weiteren wird vorgeschlagen, dass die Übersetzungseinheit zumindest eine Übersetzungsfläche des Befestigungselements umfasst. Unter einer "Übersetzungsfläche" soll in diesem Zusammenhang insbesondere eine Fläche verstanden werden, die zumindest im Wesentlichen zu einer Übersetzung einer Bewegung vorgesehen ist und die hierfür eine entsprechende Übersetzungskontur aufweist. Unter einer "Übersetzung" soll in diesem Zusammenhang insbesondere eine Änderung zumindest einer Geschwindigkeit, insbesondere einer Richtung und/oder eines anderen, einem Fachmann als sinnvoll erscheinenden Parameters insbesondere einer Bewegung, verstanden werden.

Dadurch kann eine bevorzugt einfache, kostengünstige und zuverlässige Ausgestaltung der Übersetzungseinheit erreicht werden.

Zudem wird vorgeschlagen, dass die Lagereinheit dazu vorgesehen ist, das zumindest eine Befestigungselement zumindest teilweise in Radialrichtung relativ zu der Antriebsachse bewegbar zu lagern. Dadurch kann auf vorteilhaft einfache Weise eine, insbesondere in Axialrichtung platzsparende Lagerung des zumindest einen Befestigungselements und eine bevorzugt einfache Übersetzung erreicht werden.

Ferner ist es denkbar, dass die Lagereinheit dazu vorgesehen ist, das zumindest eine Befestigungselement zumindest teilweise in Umfangsrichtung relativ zu der Antriebsachse bewegbar zu lagern. Das zu der Werkzeugaufnahme korrespondierende Einsatzwerkzeug kann in diesem Ausführungsbeispiel von Befestigungsausnehmungen gebildete Befestigungselemente aufweisen, die in Umfangsrichtung zumindest im Wesentlichen eine größere Erstreckung aufweisen als das zumindest eine Befestigungselement der Werkzeugaufnahme. Dadurch kann auf vorteilhaft einfache Weise eine, insbesondere in Axialrichtung platzsparende Lagerung des zumindest einen Befestigungselements und eine bevorzugt einfache Übersetzung erreicht werden.

Des Weiteren wird vorgeschlagen, dass die Lagereinheit dazu vorgesehen ist, das zumindest eine Befestigungselement zumindest teilweise schwenkbar zu lagern. Unter "schwenkbar" soll in diesem Zusammenhang insbesondere "um zumindest eine Achse zumindest teilweise drehbar" verstanden werden. Dadurch können auf vorteilhaft einfache Weise eine bevorzugt flexible Lagerung des zumindest einen Befestigungselements und eine bevorzugt einfache Übersetzung erreicht werden.

Zudem wird vorgeschlagen, dass das zumindest eine Befestigungselement eine Antriebswelle in Axialrichtung zumindest im Wesentlichen überragt. Unter "überragen" soll in diesem Zusammenhang insbesondere verstanden werden, dass zumindest ein Ende des zumindest einen Befestigungselements in einer, parallel zur Axialrichtung verlaufenden Befestigungsrichtung, zumindest im Wesentlichen vor einem dem Einsatzwerkzeug zugewandten Ende der Antriebswelle angeordnet ist.

Dadurch kann insbesondere erreicht werden, dass die Werkzeugaufnahme für unterschiedliche Einsatzwerkzeuge genutzt werden kann. Insbesondere kann dadurch auf eine Ausnehmung in einem Befestigungsbereich des Einsatzwerkzeugs, die zumindest im Wesentlichen in einem Zentrum des Befestigungsbereichs des Einsatzwerkzeugs angeordnet ist, vorteilhaft verzichtet werden.

### Zeichnung

Weitere Vorteile ergeben sich aus der folgenden Zeichnungsbeschreibung. In der Zeichnung sind drei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Handwerkzeugmaschine mit einer erfindungsgemäßen Werkzeugaufnahme und einem daran gekoppelten Einsatzwerkzeug in einer schematischen Seitenansicht,
- Fig. 2: die erfindungsgemäße Werkzeugaufnahme in einer Schnittdarstellung,
- Fig. 3: die erfindungsgemäße Werkzeugaufnahme mit einem daran gekoppelten Einsatzwerkzeug in einer perspektivischen Ansicht,
- Fig. 4a: die erfindungsgemäße Werkzeugaufnahme mit einem daran gekoppelten Einsatzwerkzeug in einer Schnittdarstellung,
- Fig. 4b: einen Ausschnitt der erfindungsgemäßem Werkzeugaufnahme in einer schematischen Schnittdarstellung,
- Fig. 5: die erfindungsgemäße Werkzeugaufnahme ohne ein daran gekoppeltes Einsatzwerkzeug in einer perspektivischen Ansicht,
- Fig. 6: das Einsatzwerkzeug in einer perspektivischen Darstellung,
- Fig. 7: einen Ausschnitt des Einsatzwerkzeug in einer Draufsicht und
- Fig. 8: einen Ausschnitt einer alternativen Werkzeugaufnahme in einer schematischen Schnittdarstellung.

### Beschreibung der Ausführungsbeispiele

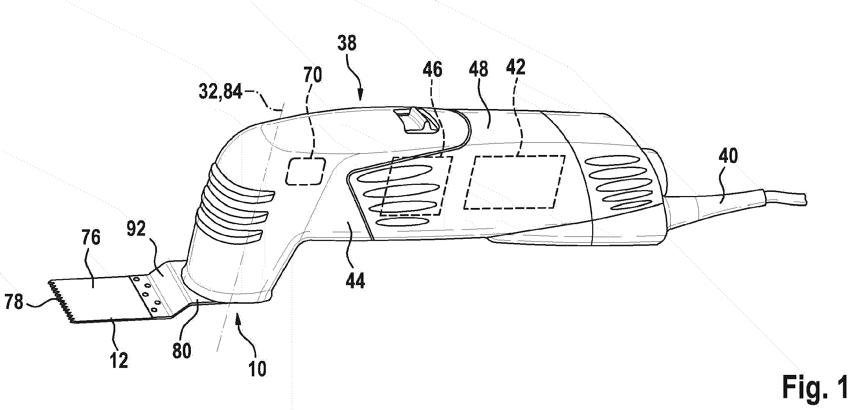

In Figur 1 ist eine Handwerkzeugmaschine 38 dargestellt. Die Handwerkzeugmaschine 38 ist von einer Oszillationshandwerkzeugmaschine gebildet. Die Handwerkzeugmaschine 38 ist von einer Elektrohandwerkzeugmaschine gebildet und weist ein Stromkabel 40 auf. Die Handwerkzeugmaschine 38 umfasst eine Antriebseinheit 42, die von einem Gehäuse 44 umschlossen ist und die über das Stromkabel 40 mit einer elektrischen Spannung versorgt werden kann. Ferner weist die Handwerkzeugmaschine 38 eine Getriebeeinheit 46 auf. Die Getriebeeinheit 46 ist zwischen der Antriebseinheit 42 und einer Werkzeugaufnahme 10 angeordnet. Das Gehäuse 44 der Handwerkzeugmaschine 38 weist einen Handgriffbereich 48 auf, in dem ein Bediener das Gehäuse 44 umfassen und die Handwerkzeugmaschine 38 in einem Betriebszustand führen kann.

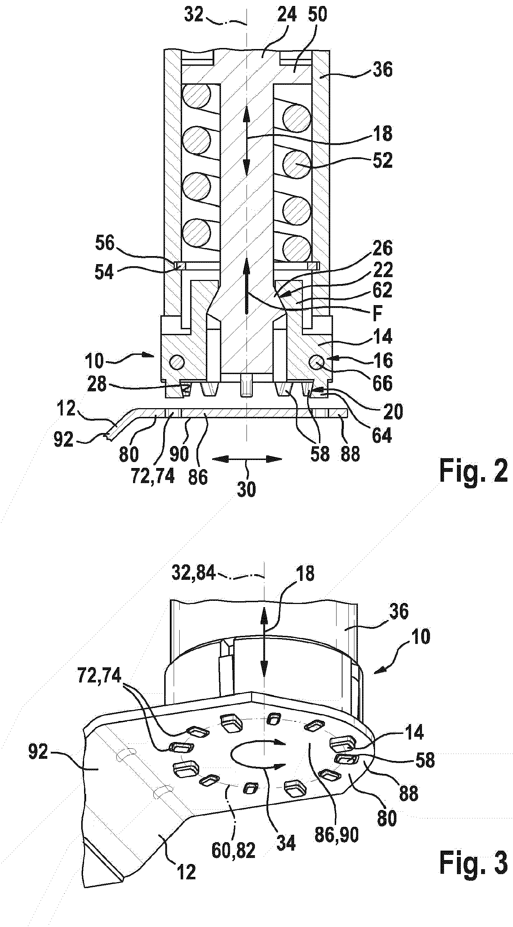

In Figur 2 ist die Werkzeugaufnahme 10 der Handwerkzeugmaschine 38 dargestellt, die zu einem oszillierenden oder rotatorischen Antrieb eines Einsatzwerkzeugs 12 vorgesehen ist. Die Werkzeugaufnahme 10 ist von einer Handwerkzeugmaschinenwerkzeugaufnahme gebildet. Die Handwerkzeugmaschine 38 weist eine Antriebswelle 36 auf, die dazu vorgesehen ist, eine Antriebsbewegung von der nicht näher dargestellten Antriebseinheit 42 auf das Einsatzwerkzeug 12, das mit der Werkzeugaufnahme 10 gekoppelt ist, in einem Betriebszustand zu übertragen. Die Antriebswelle 36 ist in einem, dem Einsatzwerkzeug 12 zugewandten Ende hohlzylindrisch ausgebildet. In diesem Bereich umschließt die Antriebswelle 36 ein Spannelement 24 der Werkzeugaufnahme 10 in Umfangsrichtung 34. Das Spannelement 24 weist ein Abstützelement 50 auf, das sich über einen Umfang des Spannelements 24 in Radialrichtung 30 nach außen erstreckt. An dem Abstützelement 50 des Spannelements 24 stützt sich in Axialrichtung 18 ein Federelement 52 ab. Das Federelement 52 ist von einer Schraubenfeder gebildet. Das Federelement 52 ist von einer Druckfeder gebildet. Das Federelement 52 stützt sich an einem, dem Einsatzwerkzeug 12 zugewandten Ende an einem Abstützelement 54 der Antriebswelle 36, die radial innerhalb der Antriebswelle 36 angeordnet ist, ab. Das Abstützelement 54 ist in einer Nut 56 in der Antriebswelle 36 in Axialrichtung 18 gehalten und ist ringförmig ausgebildet. Das Federelement 52 belastet das Spannelement 24 über dessen Abstützelement 50 in Axialrichtung 18 von dem Einsatzwerkzeug 12 weg.

Das Spannelement 24 weist einen konusförmigen Bereich 26 auf. Der konusförmige Bereich 26 ist in Axialrichtung 18 in einem der Antriebseinheit 42 abgewandten Bereich des Spannelements 24 angeordnet. Der konusförmige Bereich 26 ist in Axialrichtung 18, von der Antriebseinheit 42 zu dem Einsatzwerkzeug 12 hin betrachtet, nach dem Abstützelement 54 der Antriebswelle 36 angeordnet. Der konusförmige Bereich 26 erstreckt sich in Radialrichtung 30 nach außen. Ein kleiner Durchmesser des konusförmigen Bereichs 26 ist in Axialrichtung 18 der Antriebseinheit 42 zugewandt angeordnet.

Die Werkzeugaufnahme 10 weist ein aufnahmeseitig angeordnetes Befestigungselement 14 auf, das zu einer Koppelung mit dem Einsatzwerkzeug 12 vorgesehen ist. Die Werkzeugaufnahme 10 weist vier aufnahmeseitig angeordnete Befestigungselemente 14 auf, die zu einer Koppelung mit dem Einsatzwerkzeug 12 vorgesehen sind. Ferner weist die Werkzeugaufnahme 10 weitere Befestigungselemente 58 auf, die zu einer Übertragung einer Antriebsbewegung auf das Einsatzwerkzeug 12 vorgesehen sind. Die Befestigungselemente 14 sind auf einem Kreis 60 um eine Antriebsachse 32 der Antriebswelle 36 herum angeordnet. Die Befestigungselemente 14 sind in Radialrichtung 30 betrachtet, innerhalb der Antriebswelle 36 und außerhalb des Spannelements 24 angeordnet. Die Befestigungselemente 14 weisen einen, dem Abstützelement 50 zugewandten Bereich 62 auf, dessen Oberfläche relativ zu der Antriebsachse 32 geneigt ausgebildet ist und so eine negative Konusform bildet. Der Bereich 62 erstreckt sich in Radialrichtung 30 nach innen. Der Bereich 62 korrespondiert mit dem konusförmigen Bereich 26 des Spannelements 24. Die Werkzeugaufnahme 10 weist eine Übersetzungseinheit 22 auf, die den konusförmigen Bereich 26 des Spannelements 24 und den Bereich 62 der Befestigungselemente 14 umfasst. Die Übersetzungseinheit 22 ist zu einer Übersetzung einer Bewegung in Axialrichtung 18 in eine Bewegung in eine von der Axialrichtung 18 abweichende Richtung der Befestigungselemente 14 vorgesehen.

Die Befestigungselemente 14 weisen einen, dem Abstützelement 50 abgewandten Bereich 64 auf, der stiftförmig ausgebildet ist. Der stiftförmige Bereich 64 erstreckt sich in Axialrichtung 18 über die Antriebswelle 36 hinaus und überragt die Antriebswelle 36. In dem stiftförmigen Bereich 64 weisen die Befestigungselemente 14 jeweils eine Übersetzungsfläche 28 auf. Die Übersetzungsflächen 28 sind von Schrägen gebildet, die verkippt zur Axialrichtung 18 verlaufen. Die Übersetzungsflächen 28 bilden teilweise eine Übersetzungseinheit 20 der Werkzeugaufnahme 10. Die Übersetzungseinheit 20 ist dazu vorgesehen, eine von einer Axialbewegung 18 teilweise abweichende Relativbewegung zwischen dem Einsatzwerkzeug 12 und dem Befestigungselement 14 in eine Befestigungskraft in Axialrichtung 18 zu übersetzen. Die Befestigungskraft ist als Spannkraft F in Axialrichtung 18 ausgebildet. Die Übersetzungsflächen 28 der Befestigungselemente 14 übersetzen die Schwenkbewegung der Befestigungselemente 14, die eine Bewegungskomponente in Radialrichtung 30 aufweist, in eine Kraft mit zumindest einer Kraftkomponente in Axialrichtung, die die Spannkraft F bildet. Die Befestigungselemente 14 weisen zudem einen mittleren Bereich auf, der in Axialrichtung 18 zwischen dem Bereich 62 und dem stiftförmigen Bereich 64 angeordnet ist.

Die Werkzeugaufnahme 10 weist eine Lagereinheit 16 auf, die dazu vorgesehen ist, das Befestigungselement 14 in eine teilweise von einer Axialrichtung 18 abweichende Richtung beweglich zu lagern. Die von der Axialrichtung 18 abweichende Bewegung der Befestigungselemente 14 ist dazu vorgesehen, die Spannkraft F in Axialrichtung 18 zu erzeugen. Die Befestigungselemente 14 sind somit relativ zu der Antriebswelle 36 und dem Spannelement 24 beweglich gelagert. Die Befestigungselemente 14 sind in dem mittleren Bereich beweglich gelagert. Die Lagereinheit 16 weist Stiftelemente 66 auf, die dazu vorgesehen sind die Befestigungselemente 14 in dem mittleren Bereich beweglich zu lagern. Die Lagereinheit 16 ist dazu vorgesehen, die Befestigungselemente 14 teilweise in Radialrichtung 30 relativ zu der Antriebsachse 32 bewegbar zu lagern. Die Lagereinheit 16 ist dazu vorgesehen, die Befestigungselemente 14 schwenkbar zu lagern. Es ist auch denkbar, dass die Lagereinheit 16 dazu vorgesehen ist, die Befestigungselemente 14 teilweise oder vollständig in Umfangsrichtung 34 relativ zu der Antriebsachse 32 bewegbar zu lagern.

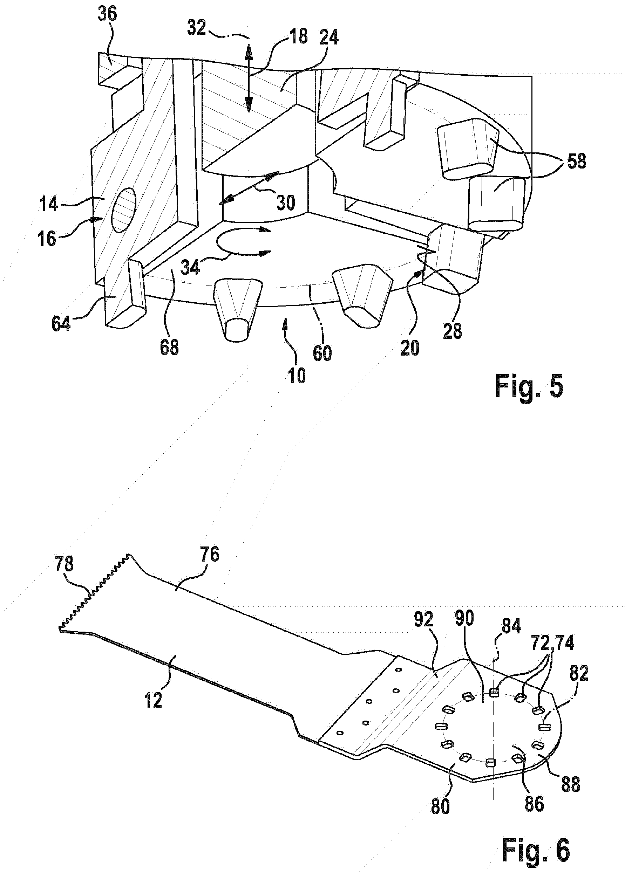

An einem, der Antriebseinheit 42 abgewandten Ende sind die weiteren Befestigungselemente 58 der Werkzeugaufnahme 10 angeordnet. Die Werkzeugaufnahme 10 weist acht weitere Befestigungselemente 58 auf. Die weiteren Befestigungselemente 58 sind auf einem Kreis 60 um die Antriebsachse 32 der Antriebswelle 36 herum angeordnet. Die Kreise 60, auf denen die Befestigungselemente 14 und die weiteren Befestigungselemente 58 angeordnet sind, weisen denselben Radius auf. Die weiteren Befestigungselemente 58 sind konusförmig ausgebildet. Die weiteren Befestigungselemente 58 sind jeweils in Paaren über Ringsegmentelemente 68 miteinander verbunden (Figur 5). Die weiteren Befestigungselemente 58 sind fest mit den Ringsegmentelementen 68 verbunden. Die weiteren Befestigungselemente 58 sind einstückig mit den Ringsegmentelementen 68 verbunden. Die Ringsegmentelemente 68 sind jeweils fest mit der Antriebswelle 36 verbunden. Die Ringsegmentelemente 68 sind einstückig mit der Antriebswelle 36 verbunden. Die Befestigungselemente 14 sind gleichmäßig zwischen den weiteren Befestigungselementen 58 angeordnet. Die Befestigungselemente 14 sind jeweils zwischen den Ringsegmentelementen 68 angeordnet. Insgesamt weist die Werkzeugaufnahme 10 zwölf Befestigungselemente 14, 58 auf.

Die Handwerkzeugmaschine 38, die die Werkzeugaufnahme 10 umfasst, weist ein nicht näher dargestelltes Betätigungselement 70 auf. Das Betätigungselement 70 kann als Hebel, Knopf oder ein anderes, einem Fachmann bekanntes Element ausgebildet sein. Durch eine Betätigung des Betätigungselements 70 durch einen Bediener wird das Spannelement 24 entgegen einer Kraft des Federelements 52 in Axialrichtung 18 von der Antriebseinheit 42 weg bewegt. Dadurch werden der konusförmige Bereich 26 des Spannelements 24 und die Bereiche 62 der Befestigungselemente aneinander vorbei geführt, wodurch die Befestigungselemente formschlüssig verschoben werden. Die Befestigungselemente 14 bewegen sich dadurch in eine Position, in der die stiftförmigen Bereiche 64 parallel zur Antriebsachse 32 angeordnet sind. In dieser Stellung kann das Einsatzwerkzeug 12 von einem Bediener auf die Befestigungselemente 14 und auf die weiteren Befestigungselemente 58 der Werkzeugaufnahme 10 in Axialrichtung 18 aufgeschoben werden (Figur 2). Die Befestigungselemente 14 und die weiteren Befestigungselemente 58 durchgreifen korrespondierende, von Befestigungsausnehmungen 72 gebildete Befestigungselemente 74 des Einsatzwerkzeugs 12.

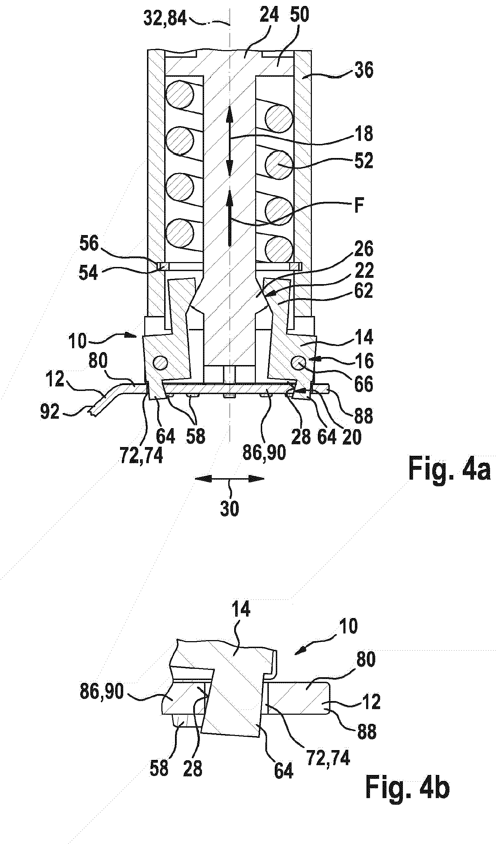

Durch ein Lösen oder Loslassen des Betätigungselements 70 durch den Bediener wird das Spannelement 24 durch die Kraft des Federelements 52 selbsttätig in Axialrichtung 18 auf die Antriebseinheit 42 zu bewegt. Dadurch werden der konusförmige Bereich 26 des Spannelements 24 und die Bereiche 62 der Befestigungselemente 14 aneinander vorbei geführt und drücken die Bereiche 62 der Befestigungselemente 14 in Radialrichtung 30 nach außen (Figur 4a). Die stiftförmigen Bereiche 64 der Befestigungselemente 14 bewegen sich dadurch in Radialrichtung 30 nach innen (Figuren 3, 4a, 4b und 7). In einem montierten Zustand des Einsatzwerkzeugs 12 an der Werkzeugaufnahme 10 wird das Einsatzwerkzeug 12 durch die Schwenkbewegung von den Befestigungselementen 14 in Axialrichtung 18 an der Werkzeugaufnahme 18 verspannt und verliersicher gehalten. Die Schwenkbewegung der Befestigungselemente 14 bewirkt eine Spannkraft F in Axialrichtung 18 auf das Einsatzwerkzeug 12. Dadurch wird das Einsatzwerkzeug 12 zu der Werkzeugaufnahme 10 hin gedrückt und bewegt sich in Axialrichtung 10 an den weiteren, konusförmigen Befestigungselementen 58 entlang. In einem vollständig verspannten Zustand des Einsatzwerkzeugs 12 in der Werkzeugaufnahme 10 liegen die weiteren Befestigungselemente 58 in Radialrichtung 30 und in Umfangsrichtung 34 an den Befestigungsausnehmungen 72 des Einsatzwerkzeugs 12 an. Die weiteren Befestigungselemente 58 sichern das Einsatzwerkzeug 12 dadurch in Radialrichtung 30 und in Umfangsrichtung 34 drehspielfrei. Die Befestigungselemente 14 und die weiteren Befestigungselemente 58 weisen senkrecht zur Axialrichtung 18 einen rechteckigen Querschnitt auf, dessen Ecken abgerundet ausgebildet sind.

Das Einsatzwerkzeug 12 ist von einem Handwerkzeugmaschineneinsatzwerkzeug gebildet (Figur 6). Das Einsatzwerkzeug 12 ist in einem mit der Werkzeugaufnahme 10 gekoppelten Zustand zu einer rotatorischen oder oszillierenden Bewegung vorgesehen. Das Einsatzwerkzeug 12 weist einen Bearbeitungsbereich 76 auf, der eine Bearbeitungskontur 78, wie beispielsweise Schneidelemente, Sägezähne oder eine andere, einem Fachmann als sinnvoll erscheinende Ausgestaltung, aufweist. Zudem weist das Einsatzwerkzeug 12 einen Befestigungsbereich 80 auf, der die von den Befestigungsausnehmungen 72 gebildete Befestigungselemente 74 aufweist. Der Bearbeitungsbereich 76 und der Befestigungsbereich 80 erstrecken sich in zwei, in Axialrichtung 18 voneinander beabstandeten, parallel verlaufenden Ebenen und sind über einen schräg zu den Ebenen verlaufenden Bereich 92 des Einsatzwerkzeugs miteinander verbunden. Die Befestigungselemente 14 sind auf einem Kreis 82 um eine Antriebsachse 84 des Einsatzwerkzeugs 12 herum angeordnet. Der Befestigungsbereich 80 ist, in Radialrichtung 30 betrachtet, innerhalb der Befestigungselemente 74 ausnehmungsfrei ausgebildet. In Radialrichtung 30 betrachtet, ist innerhalb der kreisförmig angeordneten Befestigungselemente 74, eine Materialerstreckung 86 angeordnet. Die Materialerstreckung 86 ist durchgehend d.h. ununterbrochen ausgebildet. Der Befestigungsbereich 80 ist radial innerhalb der Befestigungsausnehmungen 72 plattenförmig ausgebildet.

In Radialrichtung 30 sind die Befestigungselemente 74 teilweise von einer weiteren Materialerstreckung 88 umschlossen. In Radialrichtung 30 sind die Befestigungselemente 74 vollständig von der weiteren Materialerstreckung 88 umschlossen. D.h. die Befestigungselemente 74 sind in einer Haupterstreckungsebene des Einsatzwerkzeugs 12 geschlossen ausgebildet. Die Befestigungselemente 74 weisen senkrecht zur Axialrichtung 18 einen rechteckigen Querschnitt auf, dessen Ecken abgerundet ausgebildet sind. Das Einsatzwerkzeug 12 weist insgesamt zwölf von den Befestigungsausnehmungen 72 gebildete Befestigungselemente 74 auf.

Der Befestigungsbereich 80 des Einsatzwerkzeugs 12 weist ein Kodierelement 90 auf. Das Kodierelement 90 ist von der Materialerstreckung 86 gebildet. Das Kodierelement 90 ist dazu vorgesehen, eine Koppelung des Einsatzwerkzeugs 12 mit einer nicht dargestellten Werkzeugaufnahme einer ungeeigneten Handwerkzeugmaschine zu verhindern. Insbesondere bereits bekannte, nicht dargestellte Oszillationshandwerkzeugmaschinen weisen eine Antriebswelle auf, die sich in einem gekoppelten Zustand in Axialrichtung 18 über den Befestigungsbereich 80 des Einsatzwerkzeugs 12 hinaus erstreckt. Hierfür weisen bereits bekannte, nicht dargestellte Oszillationseinsatzwerkzeuge zusätzlich zu den kreisförmig angeordneten Befestigungsausnehmungen eine Zentrierausnehmung auf, die koaxial zu der Antriebsachse 84 ausgebildet ist. Es ist auch denkbar, dass das Kodierungselement eine Profilierung oder eine Erhebung umfasst.

Insbesondere durch die Materialerstreckung 86 weist das Einsatzwerkzeug 12 ein höheres Massenträgheitsmoment auf als die bereits bekannten, nicht dargestellten Oszillationseinsatzwerkzeuge. Eine Antriebseinheit, sowie eine Getriebeeinheit von bereits bekannten, nicht dargestellten Oszillationshandwerkzeugmaschinen sind für dieses höhere Massenträgheitsmoment nicht vorgesehen, wodurch es bei einer Koppelung und einer Nutzung des Einsatzwerkzeugs 12 mit einer der bereits bekannten, nicht dargestellten Oszillationshandwerkzeugmaschinen zu einem erhöhten Verschleiß und zu einer Verkürzung der Lebensdauer der Oszillationshandwerkzeugmaschine kommen kann. Durch das von der Materialerstreckung 86 gebildete Kodierungselement 90 wird eine Koppelung des Einsatzwerkzeugs 12 mit einer der bereits bekannten, nicht dargestellten Oszillationshandwerkzeugmaschinen sicher verhindert.

Die nachfolgenden Beschreibungen und die Zeichnungen der weiteren Ausführungsbeispiele beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des ersten Ausführungsbeispiels verwiesen werden kann. Zur Unterscheidung der Ausführungsbeispiele sind den Bezugszeichen der weiteren Ausführungsbeispiele die Ziffern 1 bis 2 vorangestellt.

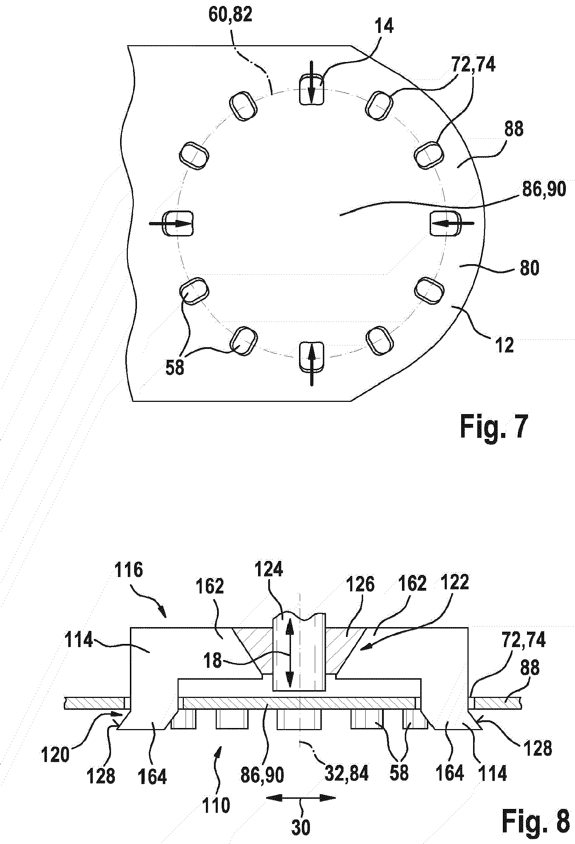

In Figur 8 ist ein Ausschnitt einer Werkzeugaufnahme 110 dargestellt. Die Werkzeugaufnahme 110 weist ein aufnahmeseitig angeordnetes Befestigungselement 114 auf, das zu einer Koppelung mit dem Einsatzwerkzeug 12 vorgesehen ist. Die Werkzeugaufnahme 110 weist vier aufnahmeseitig angeordnete Befestigungselemente 114 auf, die zu einer Koppelung mit dem Einsatzwerkzeug 12 vorgesehen sind. Die Befestigungselemente 114 entsprechen zumindest im Wesentlichen den bereits beschriebenen Befestigungselementen 14.

Die Werkzeugaufnahme 110 weist eine nicht näher dargestellte Lagereinheit 116 auf, die dazu vorgesehen ist, die Befestigungselemente 114 senkrecht zur Axialrichtung 18 verschiebbar zu lagern. Die Lagereinheit 116 umfasst eine lineare Gleitlagerung. Die Lagereinheit 116 ist dazu vorgesehen, die Befestigungselemente 114 in Radialrichtung 30 bewegbar zu lagern. Die Werkzeugaufnahme 110 weist ein Spannelement 124 auf, das sich parallel zur Axialrichtung 18 erstreckt. Das Spannelement 124 weist einen konusförmigen Bereich 126 auf. Der konusförmige Bereich 126 ist in Axialrichtung 18 in einem der Antriebseinheit 42 abgewandten Bereich des Spannelements 124 angeordnet. Der konusförmige Bereich 126 erstreckt sich in Radialrichtung 30 nach außen. Ein größerer Durchmesser des konusförmigen Bereichs 126 ist in Axialrichtung 18 der Antriebseinheit 42 zugewandt angeordnet.

Die Befestigungselemente 114 weisen einen, der Antriebseinheit 42 in Axialrichtung 18 zugewandten Bereich 162 auf, dessen Oberfläche relativ zu der Antriebsachse 32 geneigt ausgebildet ist und so eine negative Konusform bildet. Der Bereich 162 erstreckt sich in Radialrichtung 30 nach innen. Der Bereich 162 korrespondiert mit dem konusförmigen Bereich 126 des Spannelements 124. Die Werkzeugaufnahme 110 weist eine Übersetzungseinheit 122 auf, die den konusförmigen Bereich 126 des Spannelements 124 und den Bereich 162 der Befestigungselemente 114 umfasst. Die Übersetzungseinheit 122 ist zu einer Übersetzung einer Bewegung in Axialrichtung 18 in eine Bewegung in eine von der Axialrichtung 18 abweichende Richtung der Befestigungselemente 114 vorgesehen. Die Übersetzungseinheit 122 ist zu einer Übersetzung einer Bewegung in Axialrichtung 18 in eine Bewegung der Befestigungselemente 114 in Radialrichtung 30 vorgesehen.

Die Befestigungselemente 114 weisen einen, dem Bereich 162 abgewandten Bereich 164 auf, der stiftförmig ausgebildet ist. Der stiftförmige Bereich 164 erstreckt sich in Axialrichtung 18 über die Antriebswelle 36 hinaus und überragt die Antriebswelle 36 in Axialrichtung 18. In dem stiftförmigen Bereich 164 weisen die Befestigungselemente 114 jeweils eine Übersetzungsfläche 128 auf. Die Übersetzungsflächen 128 sind von Schrägen gebildet, die verkippt zur Axialrichtung 18 verlaufen. Die Übersetzungsflächen 128 bilden teilweise eine Übersetzungseinheit 120 der Werkzeugaufnahme 110. Die Übersetzungseinheit 120 ist dazu vorgesehen, eine von einer Axialbewegung vollständig abweichende Relativbewegung zwischen dem Einsatzwerkzeug 12 und dem Befestigungselement 114 in eine Spannkraft F in Axialrichtung 18 zu übersetzen. Die Übersetzungseinheit 120 ist dazu vorgesehen, die Relativbewegung in Radialrichtung 30 zwischen dem Einsatzwerkzeug 12 und dem Befestigungselement 114 in eine Spannkraft F in Axialrichtung 18 zu übersetzen.

An einem, der Antriebseinheit 42 abgewandten Ende sind die weiteren Befestigungselemente 58 der Werkzeugaufnahme 110 angeordnet. Die Werkzeugaufnahme 110 weist acht weitere Befestigungselemente 58 auf. Die weiteren Befestigungselemente 58 sind auf einem Kreis 60 um die Antriebsachse 32 der Antriebswelle 36 herum angeordnet. Die Befestigungselemente 114 und die weiteren Befestigungselemente 58 sind auf demselben Kreis 60 mit demselben Radius angeordnet. Die weiteren Befestigungselemente 58 sind konusförmig ausgebildet.

In einem montierten Zustand des Einsatzwerkzeugs 12 an der Werkzeugaufnahme 110 wird das Einsatzwerkzeug 12 durch die Bewegung der Befestigungselemente 114 in Radialrichtung 30 nach außen von den Befestigungselementen 114 in Axialrichtung 18 an der Werkzeugaufnahme 110 verspannt und verliersicher gehalten. Die Bewegung der Befestigungselemente 114 in Radialrichtung 30 nach außen bewirkt eine Spannkraft F in Axialrichtung 18 auf das Einsatzwerkzeug 12. Dadurch wird das Einsatzwerkzeug 12 zu der Werkzeugaufnahme 110 hin gedrückt und bewegt sich in Axialrichtung 18 an den weiteren, konusförmigen Befestigungselementen 58 entlang. In einem vollständig verspannten Zustand des Einsatzwerkzeugs 12 in der Werkzeugaufnahme 110 liegen die weiteren Befestigungselemente 58 in Radialrichtung 30 und in Umfangsrichtung 34 an den von den Befestigungsausnehmungen 72 gebildeten Befestigungselementen 74 des Einsatzwerkzeugs 12 an. Die weiteren Befestigungselemente 58 sichern das Einsatzwerkzeug 12 dadurch in Radialrichtung 30 und in Umfangsrichtung 34. Die Befestigungselemente 114 und die weiteren Befestigungselemente 58 weisen einen rechteckigen Querschnitt auf, dessen Ecken abgerundet ausgebildet sind.

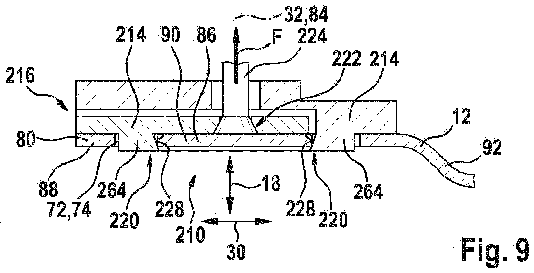

In Figur 9 ist ein Ausschnitt einer alternativ ausgestalteten Werkzeugaufnahme 210 dargestellt. Die Werkzeugaufnahme 210 weist ein aufnahmeseitig angeordnetes Befestigungselement 214 auf, das zu einer Koppelung mit dem Einsatzwerkzeug 12 vorgesehen ist. Die Werkzeugaufnahme 210 weist insgesamt vier aufnahmeseitig angeordnete Befestigungselemente 214 auf, die zu einer Koppelung mit dem Einsatzwerkzeug 12 vorgesehen sind. Die Befestigungselemente 214 entsprechen zumindest im Wesentlichen den bereits beschriebenen Befestigungselementen 14.

Die Werkzeugaufnahme 210 weist eine nicht näher dargestellte Lagereinheit 216 auf, die dazu vorgesehen ist, die Befestigungselemente 214 senkrecht zur Axialrichtung 18 verschiebbar zu lagern. Die Lagereinheit 216 umfasst eine lineare Gleitlagerung. Die Lagereinheit 216 ist dazu vorgesehen, die Befestigungselemente 214 in Radialrichtung 30 bewegbar zu lagern. Die Werkzeugaufnahme 210 weist ein nicht näher dargestelltes Spannelement 224 auf, das sich parallel zur Axialrichtung 18 erstreckt.

Die Werkzeugaufnahme 110 weist eine Übersetzungseinheit 222 auf, die eine Übersetzungskontur umfasst. Die Übersetzungseinheit 222 ist zu einer Übersetzung einer Bewegung in Axialrichtung 18 in eine Bewegung in eine von der Axialrichtung 18 abweichende Richtung der Befestigungselemente 214 vorgesehen. Die Übersetzungseinheit 222 ist zu einer Übersetzung einer Bewegung in Axialrichtung 18 in eine Bewegung der Befestigungselemente 214 in Radialrichtung 30 vorgesehen.

Die Befestigungselemente 214 weisen einen Bereich 264 auf, der stiftförmig ausgebildet ist. Der stiftförmige Bereich 264 erstreckt sich in Axialrichtung 18 über die Antriebswelle 36 hinaus und überragt die Antriebswelle 36 in Axialrichtung 18. In dem stiftförmigen Bereich 264 weisen die Befestigungselemente 214 jeweils eine Übersetzungsfläche 228 auf. Die Übersetzungsflächen 228 sind von Schrägen gebildet, die verkippt zur Axialrichtung 18 verlaufen. Die Übersetzungsflächen 228 bilden teilweise eine Übersetzungseinheit 220 der Werkzeugaufnahme 210. Die Übersetzungseinheit 220 ist dazu vorgesehen, eine von einer Axialbewegung vollständig abweichende Relativbewegung zwischen dem Einsatzwerkzeug 12 und dem Befestigungselement 214 in eine Spannkraft F in Axialrichtung 18 zu übersetzen. Die Übersetzungseinheit 220 ist dazu vorgesehen, die Relativbewegung in Radialrichtung 30 zwischen dem Einsatzwerkzeug 12 und dem Befestigungselement 214 in eine Spannkraft F in Axialrichtung 18 zu übersetzen.

In einem montierten Zustand des Einsatzwerkzeugs 12 an der Werkzeugaufnahme 210 wird das Einsatzwerkzeug 12 durch die Bewegung der Befestigungselemente 214 in Radialrichtung 30 nach innen von den Befestigungselementen 214 in Axialrichtung 18 an der Werkzeugaufnahme 210 verspannt und verliersicher gehalten. Die Bewegung der Befestigungselemente 214 in Radialrichtung 30 nach innen bewirkt eine Spannkraft F in Axialrichtung 18 auf das Einsatzwerkzeug 12. Dadurch wird das Einsatzwerkzeug 12 zu der Werkzeugaufnahme 210 hin gedrückt und bewegt sich in Axialrichtung 18 an weiteren, konusförmigen Befestigungselementen 58 entlang. In einem vollständig verspannten Zustand des Einsatzwerkzeugs 12 in der Werkzeugaufnahme 210 liegen die weiteren Befestigungselemente 58 in Radialrichtung 30 und in Umfangsrichtung 34 an den von den Befestigungsausnehmungen 72 gebildeten Befestigungselementen 74 des Einsatzwerkzeugs 12 an. Die weiteren Befestigungselemente 58 sichern das Einsatzwerkzeug 12 dadurch in Radialrichtung 30 und in Umfangsrichtung 34. Die Befestigungselemente 214 und die weiteren Befestigungselemente 58 weisen einen rechteckigen Querschnitt auf, dessen Ecken abgerundet ausgebildet sind.

Es ist auch denkbar, dass die Befestigungselemente 14, 114, 214 in Radialrichtung 30 nach außen schwenkbar oder in Umfangsrichtung oder tangential verschiebbar ausgebildet sind und dadurch eine von einer Spannkraft F gebildete Befestigungskraft in Axialrichtung 18 auf das Einsatzwerkzeug 12 bewirken.

## Patentansprüche

1. Werkzeugaufnahme (10, 110, 210), insbesondere Handwerkzeugmaschinenwerkzeugaufnahme, die zu einem oszillierenden und/oder rotatorischen Antrieb zumindest eines Einsatzwerkzeugs (12) vorgesehen ist, mit zumindest einem aufnahmeseitigen Befestigungselement (14, 114, 214), das zumindest im Wesentlichen zu einer Koppelung mit dem Einsatzwerkzeug (12) vorgesehen ist, und mit zumindest einer Lagereinheit (16, 116, 216), die dazu vorgesehen ist, das Befestigungselement (14, 114, 214) in eine zumindest teilweise von einer Axialrichtung (18) abweichende Bewegung beweglich zu lagern, **dadurch gekennzeichnet, dass** die zumindest teilweise von der Axialrichtung (18) abweichende Bewegung des zumindest einen Befestigungselements (14, 114, 214) zumindest im Wesentlichen dazu vorgesehen ist, eine Befestigungskraft in Axialrichtung (18) zu erzeugen.

2. Werkzeugaufnahme (10, 110, 210), insbesondere Handwerkzeugmaschinenwerkzeugaufnahme, die zu einem oszillierenden und/oder rotatorischen Antrieb zumindest eines Einsatzwerkzeugs (12) vorgesehen ist, mit zumindest einem Befestigungselement (14, 114, 214), das zumindest im Wesentlichen zu einer Koppelung mit dem Einsatzwerkzeug (12) vorgesehen ist, insbesondere nach Anspruch 1, **gekennzeichnet durch** eine Übersetzungseinheit (20), die dazu vorgesehen ist, eine von einer Axialbewegung zumindest teilweise abweichende Relativbewegung zwischen dem Einsatzwerkzeug (12) und dem Befestigungselement (14, 114, 214) in eine, zumindest im Wesentlichen von einer Spannkraft F gebildeten Befestigungskraft in Axialrichtung (18) zu übersetzen.

3. Werkzeugaufnahme (10, 110, 210) nach einem der vorhergehenden Ansprüche, **gekennzeichnet durch** eine Übersetzungseinheit (22, 122, 222), die zumindest im Wesentlichen zu einer Übersetzung zumindest einer Bewegung in Axialrichtung (18) in eine Bewegung in eine von einer Axialrichtung (18) abweichende Richtung des Befestigungselements (14, 114, 214) vorgesehen ist.

4. Werkzeugaufnahme (10, 110) nach einem der vorhergehenden Ansprüche, **gekennzeichnet durch** zumindest ein Spannelement (24, 124), das zumindest einen konusförmigen Bereich (26, 126) aufweist.

5. Werkzeugaufnahme (10, 110, 210) nach Anspruch 4, **dadurch gekennzeichnet, dass** der zumindest eine konusförmige Bereich (26, 126, 226) zumindest teilweise die Übersetzungseinheit (22, 122, 222) bildet.

6. Werkzeugaufnahme (10, 110, 210) zumindest nach Anspruch 2, **dadurch gekennzeichnet, dass** die Übersetzungseinheit (20, 120, 220) zumindest eine Übersetzungsfläche (28, 128, 228) des Befestigungselements (14, 114, 214) umfasst.

7. Werkzeugaufnahme (10, 110, 210) nach einem der vorhergehenden Ansprüche, **dadurch gekennzeichnet, dass** die Lagereinheit (16, 116, 216) dazu vorgesehen ist, das zumindest eine Befestigungselement (14, 114, 214) zumindest teilweise in eine Radialrichtung (30) relativ zu einer Antriebsachse (32) bewegbar zu lagern.

8. Werkzeugaufnahme (10) nach einem der vorhergehenden Ansprüche, **dadurch gekennzeichnet, dass** die Lagereinheit (16) dazu vorgesehen ist, das zumindest eine Befestigungselement (14) zumindest teilweise schwenkbar zu lagern.

9. Werkzeugaufnahme (10, 110, 210) nach einem der vorhergehenden Ansprüche, **dadurch gekennzeichnet, dass** das zumindest eine Befestigungselement (14, 114, 214) eine Antriebswelle (36) in Axialrichtung (18) zumindest im Wesentlichen überragt.

10. Handwerkzeugmaschine (38) mit einer Werkzeugaufnahme (10, 110, 210) nach einem der vorhergehenden Ansprüche.

11. System mit zumindest einer Handwerkzeugmaschine (38) nach Anspruch 10 und zumindest einem zu der Werkzeugaufnahme (10, 110, 210) nach einem der Ansprüche 1 bis 9 korrespondierenden Einsatzwerkzeug (12).
